# EUROPEAN PATENT SPECIFICATION

(11) **EP 0 587 333 B1**
(45) Date of publication and mention of the grant of the patent: **27.05.1998**
(21) Application number: 93306581.5
(22) Date of filing: 19.08.1993
(51) Int. Cl.: C08F 265/06, C08F 8/44, C08F 265/02

(54) **Use of multi-stage polymers having alkali-soluble and alkali-insoluble stages**
Verwendung von Mehrstufigen Polymeren mit alkalilöslichen und alkaliunlöslichen Produktionsstufen
Utilisation de polymères fabriqués en plusieurs étapes, ayant des étapes de formation de polymères solubles et non-solubles en milieu alcalin

(30) Priority: 03.09.1992 US 940113
(43) Date of publication of application: 16.03.1994
(73) Proprietor: ROHM AND HAAS COMPANY, Philadelphia Pennsylvania 19105 (US)
(72) Inventor: Gill, Susan Renee, Jamison, Pennsylvania 18929 (US); Shetter, John Anthony, Ambler, Pennsylvania 19002 (US); Larson, Gary Robert, Hatfiled, Pennsylvania 19440 (US)
(74) Representative: Angell, David Whilton

(56) References cited:
- EP-A- 0 225 612
- EP-A- 0 338 486
- EP-A- 0 398 576
- EP-A- 0 478 193
- WO-A-91/01336

## Description

This invention relates to the use of water-resistant multi-stage polymers as binders in wood stain compositions.

Mixtures and blends of soluble resins with insoluble emulsion polymers are known and are generally used as binders in ink formulations, and as overprint coatings to protect the printed substrate. The soluble resins were generally prepared by solution polymerization, such as described in US-A-3,03 7,952. Core-shell resins made significant improvements over mixtures and blends of the prior art, such as those described in US-A-4,916,171. By polymerizing one component in the presence of the other to form core-shell compositions, such as described in '171, improvements in production efficiency, in stability, and in rheology were realized. Improvements in core-shell compositions were again realized by chemically-grafted core-shell polymers.

By using a polyfunctional compound to graft chemically the core to the shell, as described in US-A-4,876,313, core-shell compositions were useful in areas where formulation-stability was required. What is required is a durable multi-stage polymer composition. These multi-stage compositions must be resistant to water such that when used as a coating in an outside environment, the coated substrate is protected.

US-A-5,073,591 discloses a method for producing an acidic, concentrated, polymeric emulsion that can be diluted and thereafter neutralized to provide a novel thickener. The patent discloses a two-stage method wherein the first stage contains a high level of acid monomer and a crosslinker, and the second stage contains an amino-containing monomer. Japanese Patent Application J 01-185311A discloses a method for producing polymer particles having internal voids which are useful as light diffuser or light diffuser aids for paper, fiber and leather coatings. The alkali-swellable particle of this invention is made by emulsion polymerization of a monomer containing a carboxylic acid monomer and at least one unsaturated carboxylic acid monomer.

US-A-4,923,919 discloses a process for producing an acrylic emulsion polymer as the polymer component of a pressure-sensitive adhesive. This acrylic emulsion is made in the presence of an alkali-dissolved or alkali-dispersed polymer resin. The acrylic emulsion polymer, polymerized in the presence of the polymer support resin, usually contains monomers to increase the molecular weight and internal strength of the polymer backbone. The acrylic emulsion of this invention is particularly useful as an adhesive.

US-A-4,916,171 discloses a process for making polymers comprising alkali-insoluble core and an alkali-soluble shell and compositions thereof. Core shell polymers made according to the process of this invention are stated to be suitable for use in coatings, pigmented paints, clear overprint varnishes, aqueous flexographic inks, polymer coatings for leather and floor polishes and cement compositions.

US-A-4,876,313 discloses a process for making alkali-insoluble core and an alkali-soluble shell polymer utilizing compounds which chemically graft the core and the shell together. These core shell polymers are particularly useful in inks, coatings, varnishes, floor polishes, leather treatment and cement formulations.

The present invention seeks to provide the use of improved water-resistant, semi-transparent binder as wood staining compositions.

According to the invention, this is provided by a multi-stage polymer prepared by a sequential emulsion polymerization process and comprising both an alkali-soluble polymeric component and an alkali-insoluble polymeric component prepared in the presence of the alkali-soluble component, the alkali-soluble component of the multi-stage polymer having an acid functionality greater than that of the alkali-insoluble component.

In the preparation of the multi-stage polymer for use in accordance with this invention the alkali-soluble polymer is prepared from a mixture of monomers comprising from about 40 percent to about 90 percent of an alkyl acrylate or methacrylate, and the alkali- insoluble polymer is prepared from a mixture of monomers comprising from about 65 percent to about 100 percent of an alkyl acrylate or methacrylate.

Preferably the alkyl acrylate and methacrylate monomers for the alkali-soluble and alkali-insoluble polymers are selected from the group consisting of methyl acrylate, ethyl acrylate, butyl acrylate, 2-ethylhexyl acrylate, decyl acrylate, methyl methacrylate, ethyl methacrylate, butyl methacrylate, hydroxy ethyl acrylate, hydroxyethyl methacrylate, butyl methacrylate, acrylonitrile, styrene, substituted styrene, vinyl acetate, vinyl chloride, and other C₁ to C₁₂ alkyl acrylates and methacrylates.

The alkali-soluble polymer is polymerized from a mixture of monomers containing from about 10 percent to about 60 percent, preferably from about 15 percent to about 55 percent by weight, of carboxylic acid containing monomers selected from the group consisting of acrylic acid, methacrylic acid, itaconic acid, maleic acid, fumaric acid, acrylic anhydride, methacrylic anhydride, itaconic anhydride, and fumaric anhydride.

Preferably the alkali-insoluble polymer is polymerized from a mixture of monomers containing 0 to about 10 percent by weight of monomers having an acid functionality, preferably about 0.5 percent to about 5 percent.

Preferably, at the end of the sequential polymerisation reaction the alkali-soluble polymer component of the multi-stage polymer is neutralized with a base, thereby to form a blend of neutralized alkali-soluble and alkali-insoluble polymer and an aqueous solution of neutralized alkali-soluble polymer.

Preferably the base used is selected from the group consisting of ammonia, triethyl amine, monoethanolamine, dimethylaminoethanol, aminomethylpropanol, sodium hydroxide and potassium hydroxide.

Preferably the weight ratio of alkali-insoluble polymer to the alkali-soluble polymer in the multi-stage polymer is from about 85:15 to about 15:85, more preferably from about 70:30 to about 30:70, and most preferably in the range 60:40 to 40:60.

Preferably the weight average molecular weight of the alkali-soluble polymer, as determined by gel permeation chromatography, will be in the range 5,000 to 50,000, whilst that of the alkali-insoluble polymer will be greater than 50,000

Preferably the glass transition temperature (Tg) of the alkali-insoluble polymer is in the range of from about -65°C to about 100°C, more preferably from -20°C to 100°C.

Preferably the glass transition temperature (Tg) of the alkali-insoluble polymer is is in the range of from about - 65°C to about 30°C, more preferably from - 20°C to 75°C.

Preferably the alkali-insoluble polymer is polymerized from a mixture of monomers containing up to about 15 percent, preferably up to 10 percent, by weight, an amino-group containing monomer selected from the group consisting of tert-butylaminoethyl (meth)acrylate, dimethylaminopropyl (meth)acrylamide, dimethylaminoethyl (meth)acrylate, oxazolidinylethyl (meth)acrylate, vinylbenzylamines, vinylphenylamines, 2-vinylpyridines or 4-vinylpyridines, p-aminostyrenes, substituted diallyl-amines, vinylpiperidines, vinylimidizoles, 2-morpholinoethyl (meth)acrylate, acrylamide, methacrylamide, N-substituted (meth)acrylamides, methacrylamidopropyl trimethyl ammonium chloride (MAPTAC), diallyl dimethyl ammonium chloride (DADMAC), 2-trimethyl ammonium ethyl methacrylic chloride (TMAEMC), quaternary amine salts of substituted (meth)acrylic and (meth)acrylamido monomers.

The addition of amine functionality, such as for example, dimethylaminoethyl methacrylate (DMAEMA), to the alkali-insoluble polymer is believed to promote the association between the alkali-insoluble polymer and the alkali-soluble polymer and to imrove the water resistance. However, this is only a theory and is offered only as an explanation of what is believed to happen. The invention is not intended in any way to be limited to such a theory or belief.

Preferably the alkali-soluble polymer and the alkali-insoluble polymer are chemically grafted together using one or more polyfunctional compounds having two or more sites of unsaturation of unequal reactivity.

Preferably the polyfunctional compounds are selected from the group consisting of dicyclopentenyloxyethyl-, dicyclopentenyloxy-, allyl-, methallyl-, vinyl- and crotyl-esters of acrylic, methacrylic, maleic (mono- and di-esters), fumaric (mono- and di-esters) and itaconic (mono- and di-esters) acids; allyl-, methallyl- and crotyl-vinyl ether and thioether; N- and N,N-di-allyl-, methallyl-, crotyl- and vinyl-amides of acrylic and methacrylic acids; N-allyl-, methallyl- and crotyl-maleimide; vinyl esters of 3-butenoic and 4-pentenoic acids; diallyl phthalate; triallyl cyanurate; O-allyl-, methallyl-, crotyl-, O-alkyl-, aryl-, P-vinyl-, P-allyl-, P-crotyl- and P-methallyl-phosphonates; triallyl-, trimethallyl- and tricrotyl- phosphates; O-vinyl-, O,O-diallyl-, dimethallyl- and dicrotylphosphates; cycloalkenyl esters of acrylic, methacrylic, maleic (mono- and di-esters), fumaric (mono- and di-esters) and itaconic (mono- and di-esters) acids; vinyl ethers and vinyl thioethers of cycloalkenols and cycloalkene thiols; vinyl esters of cycloalkene carboxylic acids; 1,3-butadiene, isoprene and other conjugated dienes; paramethylstyrene; chloromethylstyrene; allyl-, methallyl-, vinyl- and crotyl-mercaptan; cycloalkenyl-, allyl-, methallyl-, vinyl- and crotyl-mercaptopro-pionates; cycloalkenyl-, allyl-, methallyl-, vinyl- and crotyl-mercaptoacetates; bromotrichloromethane; bromoform; carbon tetrachloride; and carbon tetrabromide.

Preferably the polyfunctional compound is present in the alkali-soluble polymer or alkali-insoluble polymer at a level of from about 0 percent to about 10 percent based on the weight of the polymer, preferably up to about 7 percent.

The multi-stage polymers used in accordance with this invention are such that upon treatment with a base, the alkali-insoluble ploymer and a portion of the dissolved alkali-soluble polymer continue to remain substantially physically or chemically associated together.

The water resistant multi-stage polymers above described are particularly useful as semi-transparent, water-resistant binders for external wood stain coatings.

Other additives can be formulated with the multi-stage polymers to obtain additional benefits. These include the incorporation of metal ions such as Zn, Mg, and Ca into the monomer mixture so as to create metal/carboxylate crosslinks. Monomers crosslinked in this manner enhance water-resistance. Such metal ions can often be conveniently added in a complex form such as, for example, an ammonium complex. In addition, propylene glycol may be used to as a wet edge/open time extender. The amount of such additives is not critical and may be applied in any effective amount.

Additionally, other benefits such as water repellency and water beading in the dried stain film can be enhanced by adding commercial waxes, usually based on paraffin or polyolefin resins. The amount of such additives is not critical and may be applied in any effective amount.

In the paint industry, alkyds or oils are sometimes added to latex based formulations to promote cure and adhesion to difficult substrates. Such modifiers can be used in semi-transparent stains formulated with the multi-stage polymers descibed herein. The amount of such additives is, again, not critical and may be applied in any effective amount

The multi-stage polymers used as wood stain binders in accordance with this invention can be prepared by any of the methods described in US-A-4,876,313 or US-A-4,916,171. There are two preferred methods for preparing the multi-stage polymers of the present invention. Method I is most preferred.

### Method I

The first method for preparing the multi-stage polymer is by sequentially emulsion polymerizing a monomer mixture containing at least one monomer having acid functionality and, optionally, a polyfunctional compound to form the alkali-soluble polymer, followed by a second emulsion polymerization to form the alkali-insoluble polymer in the presence of the previously polymerized alkali-soluble polymer. This method of polymerization is defined as the inverse method. "Inverse" means that the alkali-soluble stage polymer is prepared first and then the alkali-insoluble polymer stage is polymerized in the presence of the previously prepared alkali-soluble stage.

The multi-stage polymers of Method I are neutralized by dissolving the alkali-soluble polymer with any suitable base or amine. However, the amine or base is preferably selected from the group consisting of ammonia, triethyl amine, monoethanolamine, dimethylaminoethanol, methylaminopropanol, sodium hydroxide and potassium hydroxide. Based on the equivalents of acid in the alkali-soluble polymer, about 0.8 to about 1.5 equivalents of amine or base is added to the polymer compositions to neutralize and substantially dissolve the alkali-soluble polymer so as to form a blend of neutralized alkali-soluble polymer and alkali-insoluble polymer, and an aqueous solution of neutralized alkali-soluble polymer.

### Method II

The second method for preparing the multi-stage polymers comprise polymerizing a monomer mixture containing at least one monomer having acid functionality and, optionally, a polyfunctional compound, under emulsion polymerization conditions to form a soluble polymer, neutralizing and solubilizing the soluble polymer with an amine or base as in Method I, and then polymerizing a second monomer mixture under emulsion polymerization conditions in the presence of the solubilised first stage polymer to form an insoluble polymer in association with the solubilised first stage polymer..

The multi-stage polymers prepared by the sequential emulsion polymerization processes described above are stable. That is to say, films made therefrom have exterior durability and are water-resistant, as measured by wash-off and wet-rub resistance. They are therefore especially useful in semi-transparent wood stains that require water resistance, while maintaining the lapping that is required of a semi-transparent stain.

The present invention will now be described only by way of example.

In the following Examples the following abbreviations have been used.

| ABBREVIATIONS | |
|---|---|
| ALMA | Allyl Methacrylate (crosslinker) |
| ASR | Alkali Soluble Resin |
| BA | Butyl Acrylate (monomer) |
| CTA | Chain Transfer Agent |
| n-DDM | n-Dodecyl Mercaptan (CTA) |
| DMAEMA | Dimethylamino Ethyl Methacrylate (amine monomer) |
| MAA | Methacrylic Acid (acid functional monomer) |
| MMA | Methyl Methacrylate |
| MMP | Methyl 3-Mercaptoproprionate (CTA) |
| DCPOMA | Dicyclopentenyloxyethyl Methacrylate |
| Tg | Glass Transition Temperature (°C) |

### EXAMPLES

### Preparation of Soluble and Insoluble Emulsion Polymers/Examples 1-20

A 4-necked round bottom flask, equipped with a condenser, stirrer and thermometer was charged with 1335 grams of DI water, 7.7 grams of Sipon L-22 (28% from Alcolac Inc.) and 2.9 grams of sodium acetate trihydrate. The flask was heated to 85°C under nitrogen. To the flask was added 50 grams of monomer emulsion I (see table below) and a solution of 1.4 grams of ammonium persulfate in 25 grams of DI water. After holding the reaction at 85°C for 15 minutes, the remaining monomer emulsion I containing CTA, if used, and a solution of 1.8 grams of ammonium persulfate in 100 grams DI water was added over 80 minutes. The monomer emulsion container was rinsed with 90 grams of DI water which was added to the flask. Reaction temperature was then held for 30 minutes at 80°C. A solution of 1.4 grams of ammonium persulfate, 2.1 grams of Sipon L-22 and 80 grams of DI water was added to the flask. Monomer emulsion II (see table below) containing CTA, if used, and a solution of 0.72 grams of ammonium persulfate in 100 grams of DI water were added over 80 minutes. Monomer emulsion II container was rinsed with 40 grams of DI water which was then added to the flask. The reaction was held at 85°C for 30 minutes after the additions were completed and then cooled and 103 grams of 29% ammonium hydroxide in 132.8 grams of DI water was added.

### Monomer Emulsions

The weight percentage of monomers and chain transfer agents (CTAs) used to prepare the individual monomer emulsions are given in Table 1 (below). The amounts (grams) of water and surfactants are given in the examples below.

| Monomer Emulsions for Examples 1-16, 19 and 20 (Example 11 given) | | |
|---|---|---|
| | Monomer Emulsion I | Monomer Emulsion II |
| DI water | 276 | 225 |
| Sipon L-22 (28%) | 12.9 | 38.6 |
| Butyl acrylate | 244.8 | 684 |
| Methyl Methacrylate | 331.2 | 36 |
| Methacrylic acid | 144 | - |
| Chain Transfer Agent (CTA) | | |
| n-DDM | 39.4 | - |

| Monomer Emulsions for Examples 17 and 18 (Example 17 )* | | |
|---|---|---|
| | Monomer Emulsion I | Monomer Emulsion II |
| DI water | 225 | 276 |
| Sipon L-22 (28%) | 38.6 | 12.9 |
| Butyl acrylate | 702 | 432 |
| Methyl Methacrylate | | 144 |
| Allyl methacrylate | 14.4 | - |
| Methacrylic acid | 3.6 | 144 |
| Chain Transfer Agent (CTA) | | |
| MMP | | 23.8 |

| | | |
|---|---|---|
| * Non inverse polymerization is described in US-A- 4,916, 171. | | |

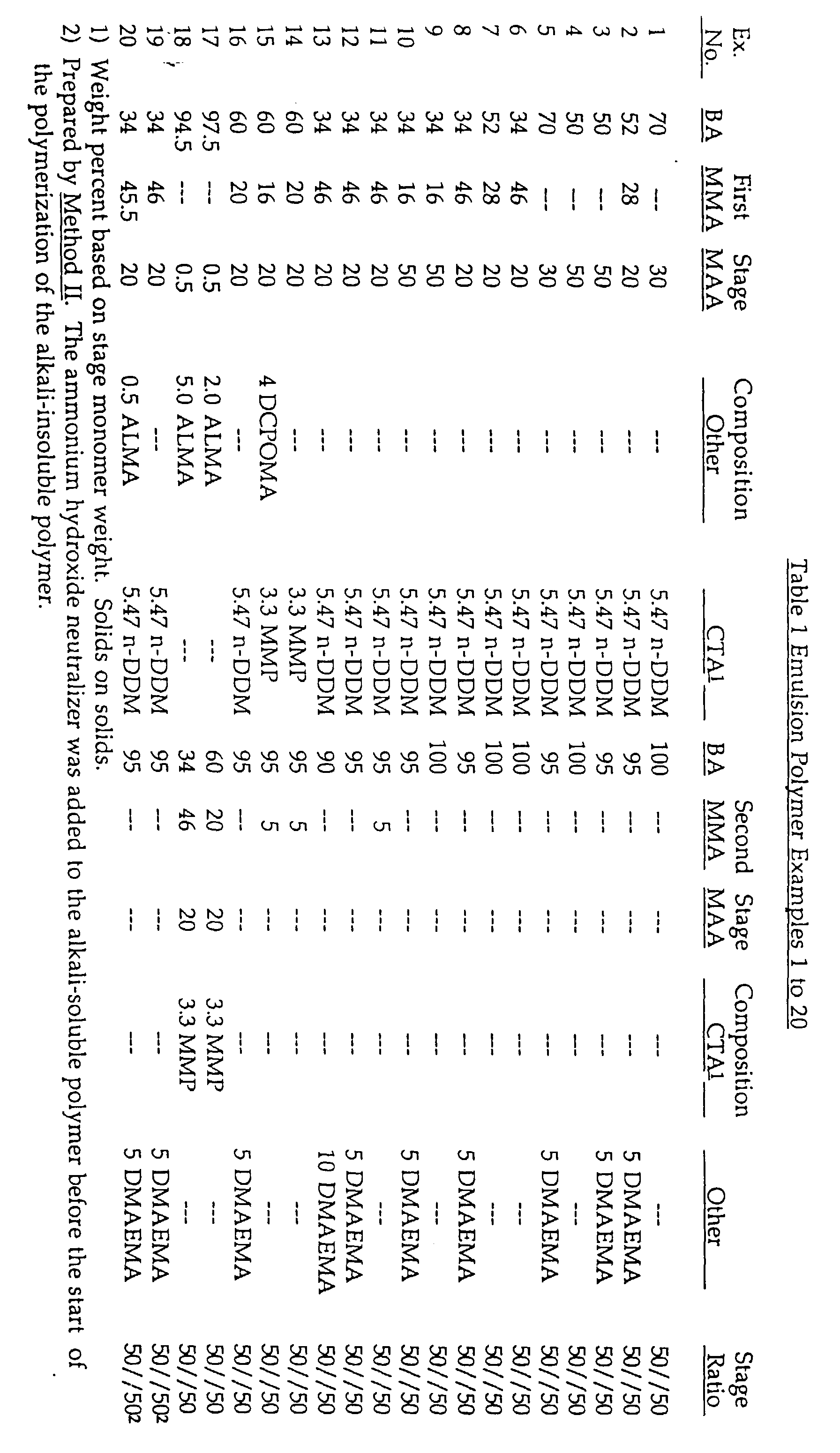

**Table II -**

| Physical Properties of Emulsions (Examples 1-20) | | | |
|---|---|---|---|
| Example No. | % Solids | Visc. | pH |
| 1 | 35.1 | 82 | 7.13 |
| 2 | 34.4 | 46 | 8.11 |
| 3 | 34.9 | 178 | 6.43 |
| 4 | 34.5 | 200 | 6.53 |
| 5 | 35.2 | 858 | 7.59 |
| 6 | 35.1 | 244 | 8.84 |
| 7 | 35.1 | 388 | 8.83 |
| 8 | 34.7 | 142 | 8.90 |
| 9 | 35.1 | 147 | 6.65 |
| 10 | 34.9 | 534 | 6.35 |
| 11 | 37.7 | 1080 | 8.69 |
| 12 | 36.8 | 862 | 8.74 |
| 13 | 36.7 | 1575 | 8.75 |
| 14 | 36.4 | 438 | 8.66 |
| 15 | 36.6 | 625 | 8.52 |
| 16 | 36.6 | 5200 | 8.97 |
| 17 | 38.0 | 650 | 8.32 |
| 18 | 39.9 | 825 | 8.81 |
| 19 | 36.0 | 198 | 8.77 |
| 20 | 35.4 | 431 | 8.45 |

The formulation disclosed below was used for Series I, Series II, Series III, Series IV and Series V laboratory screening and exposure evaluations. The formulation was prepared by standard procedures.

| **Typical Formulation** (Redwood) | | |
|---|---|---|
| | kg (Pounds) | l (Gallons) |
| Propylene Glycol (1) | 10.5 (23.2) | 10 (2.68) |
| Water | 5.3 (11.6) | 5.3 (1.39) |
| Tamol SG-1 (2) | 1 (2.2) | 0.87 (0.23) |
| Foamaster 111 (3) | 0.4 (0.9) | 0.4 (0.11) |
| RO-3097 (4) | 7.8 (17.2) | 1.6 (0.42) |
| Minex 7 (5) | 27 (59.2) | 0.33 (2.73) |
| Example 18 (39.4%) (6) | 224 (494.8) | 213 (56.31) |
| Propylene Glycol | 25.8 (56.9) | 25.2 (6.57) |
| Aqueous Ammonia (28%) | 2.5 (5.5) | 2.7 (0.72) |
| Water | 109 (240.4) | 109 (28.85) |
| | | |
| Totals | 413.7 (912.0) | 378.6 (100.01) |
| PVC = 13.4% | | |
| Volume Solids = 23.4% | | |
| Lbs/Gal = 9.12 | | |

| | | |
|---|---|---|
| (1) Wet edge/open time extender. | | |
| (2) Pigment dispersant | | |
| (3) Defoamer | | |
| (4) Red Iron Oxide | | |
| (5) Pigment extender/flatting agent | | |
| (6) Emulsion polymer from Examples 1 to 18. | | |

### TEST METHODS AND PROCEDURES

The following methods and procedures were used to obtain the information and test results appearing in Series I, Series II, Series III, Series IV and Series V laboratory screening and exposure evaluations.

### Fog Box Water Resistance

The Fog Box is a test cabinet furnished with water spray nozzles at the top, designed to provide a fine water spray evenly distributed within the cabinet test chamber, simulating steady rainfall. The panel painted with the test stain is put into the fog box. Test conditions can be varied by varying the air dry time prior to testing, and the length of time the panel is left in the test chamber. During or after exposure in the fog box, the following tests can be made:
a. **Washoff -** At the end of the preset exposure time, the stained test panel is removed from the box and allowed to dry completely. It is then rated for stain washoff by comparing it visually with an unexposed stained panel. A rating of 10 signifies that essentially no stain was washed off and the soaked board is essentially identical in appearance to the unsoaked control panel. A rating of 0 indicates that all of the applied stain has washed off the panel.
b. **Wet Rub -** The panel is removed from the box at the completion of the exposure time and immediately tested, while it is still wet, for ruboff by rubbing the stained surface with wet cheese cloth wrapped around the index finger. The rubbing direction is usually across the panel, at right angles to the wood grain, using a smooth linear stroke applying "moderate" pressure with the finger so that the cloth rubs back and forth over the same straight line. Test severity can be varied by varying the air dry time, the soak time, or the number of rubbing strokes. After the panel is dry, it is rated: 10 indicates no stain removal, 0 indicates complete removal of stain down to bare wood.

### Early Water Spot Resistance

The test panel, smooth cedar with one coat of the test stain, is positioned on a flat level surface and spotted with about 5 drops of water, and left in that position for 5 minutes. At the end of this time, the board is tipped to a vertical position to allow the water to drain off, and then air dried. When dry, the test area is examined for any residual water spotting. No trace of water spot is rated 10; complete washoff of stain down to bare wood is rated 0. The severity of the test can be varied by varying the air dry time before water spotting.

### Alkali Resistance

Stained siding beneath windows might be exposed to splash or rundown from ammonia window cleaners. Stained wood framing or siding next to stucco, cement asbestos shingle, or other cementitious building material might be exposed to alkaline rainwater runoff. Because of their alkali-soluble stage component, polymers prepared with the alkali-soluble stage last are vulnerable to attack by alkali. Several tests were designed to evaluate stain binders for alkali resistance.
a. **Ammonia Based Household Cleaner -** The test panel, usually a smooth cedar panel cut to measure 12.7 cm x 5.1 cm (5" long X 2" wide), is stained, allowed to dry and immersed in the cleaner for five minutes, after which the test panel is removed, rinsed under running water to remove residual cleaner, and left to dry. No removal of stain is rated 10; completely removal of stain is rated zero (0).
b. **Alkaline Rainwater Runoff -** The stained test panel is mounted at a 45° angle beneath a separatory funnel equipped with a stop cock. The funnel is filled with pH=11 buffer solution (constant pH, but low ionic strength) and the stop cock adjusted so that the solution drips slowly onto the top of the test panel and runs down across the face of the panel. At the conclusion of the test (500 ml of solution, which takes about an hour to empty onto the panel), the panel is rinsed, dried and rated as above.

### Brushout Lapping

Stain lapping tests are made on 15 cm x 91 cm (6" x 36") smooth cedar panels, applying the stains with a 5.1 cm (2 inch) nylon brush at a natural spread rate. A 30.4 cm (12-inch) section in the center of the panel is painted with the test stain. After a 10-minute drying interval, the 30.4 cm (12-inch) section at the left end of the board is painted, overlapping the previously stained center section by about 2 inches. After an additional 10-minute drying interval, the 30.4 cm (12-inch) section at the right end of the board is painted, again overlapping the previously stained center section by about 5.1 cm (2 inch). When the panel is completely dry, it is rated for lapping at the two seams. A rating of 10 is perfect, indicating that no lap mark is visible where the two adjacent stained sections are joined. A rating of 0 indicates a very severe mark is visible where the first and second sections overlap. Lapping tests were made at 24°C (75°F)., 50% R.H. (Relative Humidity).

| **Series I - Test Results for Formulated Stain Properties** (10 = Best) | | | | |
|---|---|---|---|---|
| | Fog Box Water Resistance | | | |
| | Overnight Dry | | 1 Week Dry | |
| Formulated Stains based on Example no. | Washoff | Wet Rub | Washoff | Wet Rub |
| 11 | 6 | 1 | 3 | 1 |
| 12 | 9 | 5 | 9 | 4 |
| 13 | 9 | 7 | 9 | 7 |
| 18 | 8 | 3 | 8 | 3 |

### Series I -Test Results

Water resistance in the Fog Box improves with multi-stage polymer prepared using Method I with increasing level of DMAEMA in the alkali-insoluble polymer stage. At 5% and 10% DMAEMA level, water resistance, wet rub resistance, is better in Examples 12 and 13 polymers than in Example 18, where the alkali-insoluble polymer is polymerized as the first stage and the alkali-soluble polymer is polymerized as the second stage polymer as polymerized in US-A-4,916, 171.

| **Series II - Exposure Data for Stains Given in Series I (above).** Overall Appearance Ratings (100 = Best) | | | |
|---|---|---|---|
| | 25 Months/south 45° | | |
| Formulated stain based on example no. | 1 coat on cedar | 1 coat on plywood | 3 coats on plywood |
| 11 | 73 | 74 | 95 |
| 12 | 79 | 79 | 91 |
| 13 | 77 | 74 | 92 |
| 18 | 68 | 47 | 46 |
| 17 | 82 | 83 | 89 |

### Series II -Test Results

"Overall Appearance" is a measure of the overall condition of the stained wood surface at the time the readings were taken. A perfect score = 100 indicates no evidence of weathering. Complete deterioration or loss of the stain = 0. These values are averages determined by statistical treatment of the data.
(a) Multi-stage polymers prepared with the alkali-soluble stage first are more durable than the corresponding polymers that are prepared with the alkali-insoluble stage first at comparable hardness (see stains prepared from Example No. 18 versus Examples 11, 12, 13).
(b) Multi-stage polymers prepared with the alkali-soluble stage first have durability equal to softer polymers made with the alkali-insoluble stage first (see stains prepared from Example 17 versus Examples 11, 12 and 13).

Generally, it is recognized that harder polymers are less durable than softer polymers made by the same process. However, as demonstrated in subparagraph (a) and (b) above, this limitation is overcome by the composition, and the method of this invention is used.

| **Series III - Test Results Obtained With Formulated Stains (10 = Best)** | | | | |
|---|---|---|---|---|
| Stains Prepared with polymers from Example No. | 14 | 15 | 16 | 17 |
| | | | | |
| Early Water Spot 1/2 hr dry | 9 | 7 | 10 | 2 |
| 1 hrdry | 10 | 10 | 10 | 5 |
| 2 hrdry | 10 | 10 | 10 | 8 |
| 3 hrdry | 10 | 10 | 10 | 8 |
| | | | | |

| Resistance to ammonia cleaners and alkaline rainwater runoff | | | | |
|---|---|---|---|---|
| Ammonia-Containing Window Cleaner | | | | |
| 5-min. Immersion | | | | |
| 1 day dry | 9 | 9 | 5 | 0 |
| 1 week dry | 9 | 9 | 7 | 1 |
| | | | | |

| Alkaline Rainwater Runoff | | | | |
|---|---|---|---|---|
| pH11 | | | | |
| 1day dry | 7 | 8 | 4 | 0 |

### Series III -Test Results

(a) Multi-stage polymers prepared with the alkali-soluble stage first have better early water spot resistance than polymers prepared with the alkali-insoluble stage first and the alkali-soluble stage second.
(b) Stains formulated using multi-stage polymers prepared with the alkali-soluble stage first are more resistant to ammonia cleaners and simulated alkaline rainwater runoff (from adjacent cementitious coatings) than the stains formulated from polymers prepared with the alkali-insoluble stage first and the alkali-soluble stage second.

| **Series IV - Stain Exposure Data for the Stains Listed in Series II (above)** Overall Appearance (100 = Best) 25 Months, South/45° | | | | |
|---|---|---|---|---|
| Formulated Stains based on polymers from Examples no. | 14 | 15 | 16 | 17 |
| | | | | |
| Smooth Cedar | 86 | 75 | 83 | 79 |
| Rough Cedar | 75 | 72 | 65 | 59 |
| T-111 Plywood | 83 | 76 | 85 | 77 |
| Plywood (3 cts) | 97 | 93 | 99 | 86 |

### Series IV - Test Results

Multi-stage polymers prepared with the alkali-soluble stage first (inverse method) are more durable than the polymers prepared with the alkali-insoluble stage first and the alkali-soluble stage second.

**Table III**

| Formulated Stains based on Example No. | BA | Stage I MAA | MMA | Stage I/II Ratio | BA | Stage II DMAEMA | 5-Min. W.Spot* | Wet Ruboff* |
|---|---|---|---|---|---|---|---|---|
| 9 | 34 | 50 | 16 | 50/50 | 100 | 0 | 3 | 5 |
| 4 | 50 | 50 | 0 | 50/50 | 100 | 0 | 4 | 3 |
| 1 | 70 | 30 | 0 | 50/50 | 100 | 0 | 4 | 6 |
| 6 | 34 | 20 | 46 | 50/50 | 100 | 0 | 10 | - |
| 7 | 52 | 20 | 28 | 50/50 | 100 | 0 | 10 | 5 |
| 10 | 34 | 50 | 16 | 50/50 | 95 | 5 | 9 | 5 |
| 3 | 50 | 50 | 0 | 50/50 | 95 | 5 | 9 | 5 |
| 5 | 70 | 30 | 0 | 50/50 | 95 | 5 | 10 | 8 |
| 8 | 34 | 20 | 46 | 50/50 | 95 | 5 | 10 | 8 |
| 2 | 52 | 20 | 28 | 50/50 | 95 | 5 | 10 | 8 |
| 17 | alkali insoluble stage first (control) | | | | | | 7 | 7 |

| | | | | | | | | |
|---|---|---|---|---|---|---|---|---|
| *10 = Best | | | | | | | | |

### Table III -Test Results

(a) Multi-stage polymers prepared with the alkali-soluble stage first that contain 50% MAA in the alkali-soluble stage show the poorest water spot resistance without DMAEMA in the alkali-insoluble stage. These polymers show the greatest improvement in water spot when DMAEMA is incorporated into the alkali-insoluble stage. Wet ruboff resistance also improves with DMAEMA.
(b) Multi-stage polymers prepared with the alkali-soluble stage first with DMAEMA in the alkali-insoluble stage have better water spot resistance than the polymers prepared with the alkali-insoluble stage first and, generally, polymers prepared with the alkali-soluble stage first with DMAEMA in the alkali-insoluble stage have better wet rub resistance than the control (stain prepared with the polymer from Example 17).

| **Series V - Water Resistance Properties of Semi-Transparent Stains Prepared From Polymers Prepared by Method II** | | | |
|---|---|---|---|
| | Water Resistance (10=Best) | | |
| Formulated Stains Based On Examples No. | 1 Hr. | 2 Hr. | 3 Hr. |
| 19 | 9 | 10 | 10 |
| 20 | 9 | 10 | 10 |
| 8 | 9 | 10 | 10 |
| 17 | 2 | 4 | 6 |

### Series V - Test Results

The formulated semi-transparent stains prepared using the polymers prepared by Method II (Examples 19 and 20) have water resistance equivalent to the polymers prepared by Method I (Example 8); and better water resistance than the polymer where the alkali-insoluble polymer is polymerized as the first stage (Example 17 - non-inverse method of polymerization).

| **Series VI - Lapping Test Results for Formulated Stains** (10 = Best) | | |
|---|---|---|
| Formulated Stains based on Example no. | Lapping at 10 min. | Lapping at 20 min. |
| 11 | 9 | 9 |
| 12 | 8 | 7 |
| 13 | 9 | 7 |
| | | |
| Latex* | 5 | 3 |

| | | |
|---|---|---|
| * Exterior latex polymer - contains no alkali-soluble polymer stage. | | |

### Series VI - Test Results

Stain brushout lapping obtained with multi-stage polymer prepared using Method I is better than lapping obtained with typical latex polymers made for exterior water-based paints.

## Claims

1. The use, as a semi-transparent, water-repellant binder in wood stains, of a multi-stage polymer comprising both an alkali-soluble polymer component and an alkali-insoluble polymer component, the said alkali-soluble component having an acid functionality greater than that of the alkali-insoluble component, and wherein the multi-stage polymer is obtained by the sequential emulsion polymerisation of a first monomer charge containing, on a weight basis, from 40 to 90 per cent of one or more alkyl acrylates or methacrylates and from 10 to 60 per cent, of a carboxylic acid group containing monomer selected from acrylic acid, methacrylic acid, itaconic acid, maleic acid, fumaric acid, acrylic anhydride, methacrylic anhydride, itaconic anhydride, and fumaric anhydride, to form the alkali soluble component and, in the presence of the alkali-soluble component, a second monomer charge containing on a weight basis from 65 to 100 per cent of one or more alkyl acrylates or methacrylates, and 0 to 10 per cent by weight of monomers having a carboxylic acid functionality to form the alkali insoluble component.

2. A use as claimed in claim 1, wherein the weight ratio of the alkali-insoluble polymer to the alkali-soluble polymer in the said multistage polymer is in the range 85:15 to 15:85, preferably from 70:30 to 30:70, more preferably from 60:40 to 40.:60.

3. A use according to claim 1 or 2, wherein the second stage monomer charge contains up to 15 per cent of a monomer having an amine functionality and selected from tert-butylaminoethyl (meth)acrylate, dimethylaminopropyl (meth)acrylamide, dimethylaminoethyl (meth)acrylate, oxazolidinylethyl (meth)acrylate, vinylbenzylamines, vinylphenylamines, 2-vinylpyridines or 4-vinylpyridines, paminostyrenes, substituted diallyl-amines, vinylpiperidines, vinylimidizoles, 2-morpholinoethyl (meth)acrylate, acrylamide, methacrylamide, N-substituted (meth)acrylamides, methacrylamidopropyl trimethyl ammonium chloride (MAPTAC), diallyl dimethyl ammonium chloride (DADMAC), 2-trimethyl ammonium ethyl methacrylic chloride (TMAEMC), and quaternary amine salts of substituted (meth)acrylic and (meth)acrylamido monomers.

4. A use as claimed in claim 1, 2 or 3 wherein, in the said multistage polymer, the said alkali-soluble polymer component and the alkali-insoluble polymer component are chemically grafted one to the other using one or more polyfunctional compounds having two or more sites of unsaturation of unequal reactivity.

5. A use as claimed in any one of claims 1 to 4 wherein the multi-stage polymer is one which has been treated with a base so as to neutralise acidic groups in the alkali-soluble component of the multi stage polymer, thereby forming a blend of neutralised alkali-soluble polymer and alkali-insoluble polymer in an aqueous solution of neutralised alkali-soluble polymer.

6. A use as claimed in claim 5, wherein the multi-stage polymer is one which has been neutralised with from 0.8 to 1.5 equivalents, based on the equivalents of acid in the alkali-soluble polymer, of a base selected from ammonia, triethylamine, monoethanolamine, dimethylaminoethanol, methylaminopropanol, sodium hydroxide and potassium hydroxide.

## Patentansprüche

1. Verwendung eines Mehrstufenpolymers, umfassend sowohl eine Alkali-lösliche Polymerkomponente als auch eine Alkali-unlösliche Polymer-komponente, wobei die Alkali-lösliche Komponente eine Säurefunktionalität größer als jene der Alkali-unlöslichen Komponente aufweist und wobei das Mehrstufenpolymer durch die aufeinanderfolgende Emulsionspolymerisation einer ersten Monomercharge, enthaltend auf Gewichtsbasis 40 bis 90 Prozent eines oder mehrere Alkylacrylate oder -methacrylate und 10 bis 60 Prozent eines Carbonsäuregruppen enthaltenden Monomers, ausgewählt aus Acrylsäure, Methacrylsäure, Itaconsäure, Maleinsäure, Fumarsäure, Acrylsäureanhydrid, Methacrylsäureanhydrid, ltaconsäureanhydrid und Furnarsäureanhydrid, unter Bildung der Alkali-löslichen Komponente, und in Anwesenhelt der Alkali-löslichen Komponente, einer zweiten Monomercharge, enthaltend auf Gewichtsbasis 65 bis 100 Prozent eines oder mehrere Alkylacrylate oder methacrylate und 0 bis 10 Gewichtsprozent Monomere mit einer Carbonsäurefunktionalität, unter Bildung der Alkali-unlöslichen Komponente erhalten wird, als halbdurchsichtiges, wasserabweisendes Bindemittel in Holzbeizen.

2. Verwendung nach Anspruch 1, wobei das Gewichtsverhältnis des Alkali-unlöslichen Polymers zu dem Alkali-löslichen Polymer in dem Mehrstufenpolymer im Bereich von 85:15 bis 15:85, vorzugsweise 70:30 bis 30:70, bevorzugter 60:40 bis 40:60, liegt.

3. Verwendung nach Anspruch 1 oder 2, wobei die Monomercharge der zweiten Stufe bis zu 15 Prozent eines Monomers mit einer Aminfunktionalität enthält und ausgewählt ist aus tert-Butylaminoethyl(meth)acrylat, Dimethylaminopropyl(meth)acrylamid, Dimethylaminoethyl(meth)acrylat, Oxazolidinylethyl(meth)acrylat, Vinylbenzylaminen, Vinylphenylamimen, 2-Vinylpyridinen oder 4-Vinylpyridinen, p-Aminostyrolen, substituierten Diallylaminen, Vinylpiperidinen, Vinylimidazolen, 2-Morpholinoethyl(meth)acrylat, Acrylamid, Methacrylamid, N-substituierten (Meth)acrylamiden, Methacrylamidopropyltrimethylammoniumchlorid (MAPTAC), Diallyldimethylammoniumchlorid (DADMAC), 2-Trimethylammoniumethylmethacrylsäurechlorid (TMAEMC) und quaternären Aminsalzen von substituierten (Meth)acryl- und (Meth)acrylamido-Monomeren.

4. Verwendung nach Anspruch 1, 2 oder 3, wobel in dem Mehrstufenpolymer die Alkali-lösliche Polymerkomponente und die Alkali-unlösliche Polymerkomponente unter Verwendung von einer oder mehreren polyfunktionellen Verbindungen mit zwei oder mehreren Stellen an Ungesättigtheit ungleicher Reaktivität chemisch aneinander gepfropft werden.

5. Verwendung nach einem der Ansprüche 1 bis 4, wobei das Mehrstufenpolymer eines ist, das mit einer Base behandelt wurde, so daß die sauren Gruppen in der Alkali-löslichen Komponente des Mehrstufenpolymers neutralisiert werden, wodurch ein Gemisch von neutralisiertem Alkali-löslichem Polymer und Alkali-unlöslichem Polymer in einer wässerigen Lösung von neutralisiertem Alkali-löslichem Polymer gebildet wird.

6. Verwendung nach Anspruch 5, wobei das Mehrstufenpolymer eines ist, das mit 0,8 bis 1,5 Äquivalenten, basierend auf den Äquivalenten von Säure in dem Alkali-löslichen Polymer, einer Base, ausgewählt aus Ammoniak, Triethylamin, Monoethanolamin, Dimethylaminoethanol, Methylaminopropanol, Natriumhydroxid und Kaliumhydroxid, neutralisiert wurde.

## Revendications

1. Utilisation, en tant que liant hydrophobe semi-transparent dans les teintures pour bois, d'un polymère à plusieurs étages comprenant tant un constituant polymère soluble dans les alcalis qu'un constituant polymère insoluble dans les alcalis, ledit constituant soluble dans les alcalis ayant une fonctionnalité acide supérieure à celle du constituant insoluble dans les alcalis, et où le polymère à plusieurs étages est obtenu par la polymérisation séquentielle en émulsion d'une première charge de monomères comprenant, sur une base pondérale, de 40 à 90 % d'un ou plusieurs acrylates ou méthacrylates d'alkyle et de 10 à 60 % d'un monomère contenant un groupe acide carboxylique, choisi parmi l'acide acrylique, l'acide méthacrylique, l'acide itaconique, l'acide maléique, l'acide fumarique, l'anhydride acrylique, l'anhydride méthacrylique, l'anhydride itaconique et l'anhydride fumarique, pour former le constituant soluble dans les alcalis, et, en présence du constituant soluble dans les alcalis, d'une deuxième charge de monomères contenant, sur une base pondérale, de 65 à 100 % d'un ou plusieurs acrylates ou méthacrylates d'alkyle, et de 0 à 10 % en poids de monomères ayant une fonctionnalité acide carboxylique, pour former le constituant insoluble dans les alcalis.

2. Utilisation selon la revendication 1, dans laquelle le rapport pondéral du polymère insoluble dans les alcalis au polymère soluble dans les alcalis, dans ledit polymère à plusieurs étages, est compris dans l'intervalle de 85:15 à 15:85, de préférence de 70:30 à 30:70 et plus particulièrement de 60:40 à 40:60.

3. Utilisation selon la revendication 1 ou 2, dans laquelle la charge de monomères du deuxième étage contient jusqu'à 15 % en poids d'un monomère ayant une fonctionnalité amine et choisi parmi le (méth)acrylate de tert-butylaminoéthyle, le diméthylaminopropyl(méth)acrylamide, le (méth)acrylate de diméthylaminoéthyle, le (méth)acrylate d'oxazolidinyléthyle, les vinylbenzylamines, les vinylphénylamines, les 2-vinylridines ou les 4-vinylpyridines, les p-aminostyrènes, les diallylamines substituées, les vinylpipéridines, les vinylimidazoles, le (méth)acrylate de 2-morpholinoéthyle, l'acrylamide, le méthacrylamide, les (méth)acrylamides N-substitués, le chlorure de méthacrylamidopropyltriméthylammonium (MAPTAC), le chlorure de diallyldiméthylammonium (DADMAC), le chlorure méthacrylique de 2-triméthylammoniuméthyle (TMAEMC) et les sels d'amine quaternaire de monomères (méth)acryliques et (méth)acrylamido substitués.

4. Utilisation selon la revendication 1, 2 ou 3, dans laquelle, dans ledit polymère à plusieurs étages, ledit constituant polymère soluble dans les alcalis et le constituant polymère insoluble dans les alcalis sont chimiquement greffés l'un à l'autre par utilisation d'un ou plusieurs composés polyfonctionnels ayant au moins deux sites d'insaturation ayant des réactivité inégales.

5. Utilisation selon l'une quelconque des revendications 1 à 4, dans laquelle le polymère à plusieurs étages est un polymère qui a été traité avec une base de façon à neutraliser les groupes acides du constituant soluble dans les alcalis du polymère à plusieurs étages, de façon à former un mélange du polymère soluble dans les alcalis neutralisé et du polymère insoluble dans les alcalis dans une solution aqueuse du polymère soluble dans les alcalis et neutralisé.

6. Utilisation selon la revendication 5, dans laquelle le polymère à plusieurs étages est un polymère qui a été neutralisé avec 0,8 à 1,5 équivalents, par rapport aux équivalents d'acide dans le polymère soluble dans les alcalis, d'une base choisie parmi l'ammoniac, la triéthylamine, la monoéthanolamine, le diméthylaminoéthanol, le méthylaminopropanol, l'hydroxyde de sodium et l'hydroxyde de potassium.
